# EUROPEAN PATENT APPLICATION

(11) **EP 4 343 369 A2**
(43) Date of publication of application: **27.03.2024**
(21) Application number: 22869463.4
(22) Date of filing: 28.12.2022
(51) Int. Cl.: G01S 7/36

(54) **INTERFERENCE SIGNAL DETECTION METHOD AND APPARATUS, AND INTEGRATED CIRCUIT, RADIO DEVICE AND TERMINAL**

(30) Priority: 24.06.2022 CN 202210725627
(71) Applicant: Calterah Semiconductor Technology (Shanghai) Co., Ltd, Shanghai 201210 (CN)
(72) Inventor: TANG, Ran, Shanghai 201210 (CN); ZHAO, Qiyong, Shanghai 201210 (CN); ZHU, Yan, Shanghai 201210 (CN)
(74) Representative: Savi, Massimiliano
(86) International application number: PCT/CN2022/143018
(87) International publication number: WO 2023/041097

(57) **Abstract**

An interference signal detection method, apparatus, integrated circuit, radio device and terminal are disclosed, wherein, the method includes: transmitting a target signal based on a radar, receiving N frames of echo signals, obtaining N pieces of 2D FFT plane information according to the N frames of echo signals, wherein any piece of 2D FFT plane information includes power information corresponding to a range and a velocity, and detecting whether an echo signal is interfered according to accumulated power information corresponding to the range gate in the piece of 2D FFT plane information. In this way, the interference is characterized by the accumulated power information, which has good robustness and simple operations, and can achieve low power consumption of the radar system.

## Description

### Cross-reference

This application claims the priority of Chinese Patent Application No. 202210725627.8, filed to the CNIPA on June 24, 2022, and entitled "Interference Signal Detection Method and Apparatus", the entire contents of which are incorporated herein by reference.

### Technical field

Embodiments of the application relate to the technical field of sensors, in particular to an interference signal detection method and apparatus.

### Background

Linear frequency modulation continuous wave (LFMCW) radar is widely used in many fields such as communication, target detection, etc. For example, it can be used in blind spot detection, lane change assist, automatic cruise control and parking assistance of vehicles, etc. However, when multiple LFMCW radars are applied in the same scenario, interference such as co-frequency and/or adjacent frequency interference can be generated between each other, i.e., interference signals in the shape of spikes or oscillating pulses can be generated in the signals received by the LFMCW radars, which in turn can degrade the working performance of the radar sensors.

In some implementations, time-frequency analysis methods, such as short time Fourier transform (STFT), are used to perform interference feature extraction according to the characteristic that the interference signal is a linear frequency modulation signal, i.e., the frequency varies linearly with time. However, this detection method needs a large amount of signal data processing resources, and the radar system has high power consumption and poor timeliness.

### Summary

The following is a summary of the subject described in detail herein. This summary is not intended to limit the protection scope of the claims.

In a first aspect, an embodiment of the present application provides a method for interference signal detection, including:
transmitting a target signal based on a radar;
receiving N frames of echo signals, wherein the N frames of echo signals are signals returned after the target signal is reflected, N is an integer greater than 1;
obtaining N pieces of 2D FFT plane information according to the N frames of echo signals, wherein any piece of 2D FFT plane information includes power information corresponding to a range and a velocity;
detecting whether an echo signal is interfered according to a piece of accumulated power information corresponding to a range gate in the piece of 2D FFT plane information, wherein the a piece of accumulated power information corresponding to the range gate is a piece of accumulated power information of sampling points of the range gate in the piece of 2D FFT plane information along a dimension of velocity, and the range gate is a scope of range.

In a possible implementation mode, detecting whether the echo signal is interfered according to the piece of accumulated power information corresponding to the range gate in the piece of 2D FFT plane information includes:
for any piece of 2D FFT plane information of the N pieces of 2D FFT plane information, calculating pieces of accumulated power information of the sampling points of M range gates in the any piece of 2D FFT plane information along the dimension of velocity respectively, wherein a range gate is a scope of range and the M range gates are continuous, M is an integer greater than 1;
determining a signal subject to interference among the N frames of echo signals according to the pieces of accumulated power information corresponding to the M range gates.

In a possible implementation mode, determining the signal subject to interference among the N frames of echo signals according to the pieces of accumulated power information corresponding to the M range gates includes:
for any first frame of echo signal and second frame of echo signal among the N frames of echo signals, calculating difference values between pieces of accumulated power information corresponding to the first frame of echo signal and the second frame of echo signal in range gates with a same index value respectively and taking the absolute value thereof to obtain L absolute difference values, where L is an integer greater than 1 and less than or equal to M;
when there exists a target absolute difference value greater than a first threshold among the L absolute difference values, determining that an echo signal with a greater piece of accumulated power information in a target range gate among the first frame of echo signal and the second frame of echo signal is the signal subject to interference; wherein the target range gate is a range gate in which a calculated absolute difference value is the target absolute difference value.

In a possible implementation mode, the first frame of echo signal is a signal received prior to the second frame of echo signal, the method further includes:
if it is determined that the first frame of echo signal among the first frame of echo signal and the second frame of echo signal is the signal subject to interference, turning off an anti-interference mechanism;
if it is determined that the second frame of echo signal among the first frame of echo signal and the second frame of echo signal is the signal subject to interference, activating the anti-interference mechanism.

In a possible implementation mode, determining the signal subject to interference among the N frames of echo signals according to the pieces of accumulated power information corresponding to the M range gates includes:
for any third frame of echo signal and fourth frame of echo signal among the N frames of echo signals, calculating a difference value between the pieces of accumulated power information corresponding to the third frame of echo signal and the fourth frame of echo signal in a first range gate and taking an absolute value thereof to obtain a first absolute difference value, wherein the first range gate is any one of the M range gates;
when the first absolute difference value is greater than a first threshold, determining that an echo signal with a greater piece of accumulated power information corresponding to the first range gate among the third frame of echo signal and the fourth frame of echo signal is the signal subject to interference.

In a possible implementation mode, determining the signal subject to interference among the N frames of echo signals according to the pieces of accumulated power information corresponding to the M range gates includes:
when there is a piece of accumulated power information greater than a second threshold among the pieces of accumulated power information corresponding to the M range gates of a fifth frame of echo signal among the N frames of echo signals, determining that the fifth frame of echo signal is the signal subject to interference; wherein the fifth frame of echo signal is any one of the N frames of echo signals.

In a possible implementation mode, detecting whether the echo signal is interfered according to the piece of accumulated power information corresponding to the range gate in the piece of 2D FFT plane information includes determining whether a current frame of echo signal is interfered by:
based on the piece of 2D FFT plane information of the current frame of echo signal and a reference frame of echo signal among the N frames of echo signals, subtracting, from pieces of accumulated power information corresponding to range gates with L index values in the current frame of echo signal, pieces of accumulated power information corresponding to range gates with the same index values in the reference frame of echo signal, respectively, to obtain L difference values;
when a set condition is met, determining that the current frame of echo signal is interfered; wherein the set condition is: "an absolute value of at least one of the L difference values is greater than a first threshold and is positive" or "absolute values of the L difference values are all greater than the first threshold and are positive";
wherein the reference frame of echo signal is a frame of echo signal adjacent or non-adjacent to the current frame of echo signal; 1≤L≤M, M is a total number of range gates in the piece of 2D FFT plane information.

In a possible implementation mode, detecting whether the echo signal is interfered according to the piece of accumulated power information corresponding to the range gate in the piece of 2D FFT plane information includes determining whether a current frame of echo signal is interfered by:
based on the piece of 2D FFT plane information of the current frame of echo signal, calculating a piece of accumulated power information corresponding to each of the range gates with L index values in the current frame of echo signal, where 1 <L<M, M is a total number of range gates in the piece of 2D FFT plane information;
when a set condition is met, determining that the current frame of echo signal is interfered; wherein the setting condition is that "at least one of the pieces of accumulated power information is greater than a second threshold" or "all of the pieces of accumulated power information is greater than the second threshold".

In a possible implementation mode, obtaining the N pieces of 2D FFT plane information according to the N frames of echo signals includes:
performing down-conversion processing on the N frames of echo signals respectively to obtain N intermediate frequency signals;
performing sampling and two-dimension fast Fourier transform on the N intermediate frequency signals respectively to obtain the N pieces of 2D FFT plane information.

In a possible implementation mode, the radar is a millimeter wave radar.

In a second aspect, an embodiment of the present application provides an apparatus for interference signal detection, including:
a transmitting module for transmitting a target signal based on a radar;
a receiving module for receiving N frames of echo signals, wherein the N frames of echo signals are signals returned after the target signal is reflected, N is an integer greater than 1;
a first determination module for obtaining N pieces of 2D FFT plane information according to the N frames of echo signals, wherein any piece of 2D FFT plane information includes power information corresponding to a range and a velocity;
a calculation module for calculating, for any piece of 2D FFT plane information of the N pieces of 2D FFT plane information, piece of accumulated power information of sampling points of M range gates in the any piece of 2D FFT plane information along the dimension of velocity respectively, wherein the range gate is a scope of range and the M range gates are continuous, M is an integer greater than 1; and
a second determination module for determining a signal subject to interference among the N frames of echo signals according to the pieces of accumulated power information corresponding to the M range gates.

In a possible implementation mode, the second determination module is specifically used for:
for any first frame of echo signal and second frame of echo signal among the N frames of echo signals, calculating difference values between pieces of accumulated power information corresponding to the first frame of echo signal and the second frame of echo signal in range gates with a same index value respectively and taking absolute values thereof to obtain L absolute difference values, wherein L is an integer greater than 1 and less than or equal to M; when there is a target absolute difference value greater than a first threshold among the L absolute difference values, determining that an echo signal with a greater piece of accumulated power information in a target range gate among the first frame of echo signal and the second frame of echo signal is the signal subject to interference; wherein the target range gate is a range gate in which a calculated absolute difference value is the target absolute difference value.

In a possible implementation mode, the first frame of echo signal is a signal received prior to the second frame of echo signal, the apparatus for interference signal detection further including:
a judgment module, which is used for turning off an anti-interference mechanism if the first frame of echo signal is the signal subject to interference; activating the anti-interference mechanism if the second frame of echo signal is the signal subject to interference.

In a possible implementation mode, the second determination module is specifically used for:
for any third frame of echo signal and fourth frame of echo signal among the N frames of echo signals, calculating a difference value between pieces of accumulated power information corresponding to the third frame of echo signal and the fourth frame of echo signal in a first range gate and taking an absolute value thereof to obtain a first absolute difference value, wherein the first range gate is any one of the M range gates; when the first absolute difference value is greater than a first threshold, determining that an echo signal with a greater piece of accumulated power information among the third frame of echo signal and the fourth frame of echo signal when calculating the first range gate is the signal subject to interference.

In a possible implementation mode, the second determination module is specifically used for:
when there is a piece of accumulated power information greater than a second threshold among the pieces of accumulated power information corresponding to the M range gates of a fifth frame of echo signal among the N frames of echo signals, determining that the fifth frame of echo signal is the signal subject to interference; wherein the fifth frame of echo signal is any one of the N frames of echo signals.

In a possible implementation mode, the first determination module is specifically used for performing down-conversion processing on the N frames of echo signals respectively to obtain N intermediate frequency signals; performing sampling and two-dimension fast Fourier transform on the N intermediate frequency signals respectively to obtain the N pieces of 2D FFT plane information.

In a third aspect, a method for interference signal detection, which can be used in an FMCW sensor, includes:
performing 2D-FFT processing on an echo signal to obtain at least two frames of range-velocity data;
for any frame of range-velocity data, selecting at least part of range gates, and performing energy accumulation on the selected range gates respectively along a velocity dimension to obtain an energy accumulation value of each of the selected range gates; and
acquiring a difference value between energy accumulation values of range gates with a same index value of any two frames of range-velocity data to determine whether the echo signal is interfered.

In a possible implementation mode, acquiring the difference value between the energy accumulation values of the range gates with the same index value of any two frames of range-velocity data to determine whether the echo signal is interfered includes:
determining an energy accumulation value of a range gate with a preset index value in a first frame of range-velocity data as a first energy accumulation value;
determining an energy accumulation value of a range gate with the preset index value in a second frame of range-velocity data as a second energy accumulation value;
subtracting the second energy accumulation value from the first energy accumulation value to obtain the difference value;
if an absolute value of the difference value is greater than a preset threshold and the difference value is positive, determining that an echo signal corresponding to the first frame of range-velocity data is a signal subject to interference and an echo signal corresponding to the second frame of range-velocity data is a signal not subject to interference;
if the absolute value of the difference value is greater than the preset threshold and the difference value is negative, determining that the echo signal corresponding to the second frame of range-velocity data is a signal subject to interference, and the echo signal corresponding to the first frame of range-velocity data is a signal not subject to interference.

In a possible implementation mode, acquiring the difference value between the energy accumulation values of the range gates with the same index value of any two frames of range-velocity data to determine whether the echo signal is interfered further includes:
if the absolute value of the difference value is less than or equal to the preset threshold, determining that the echo signal corresponding to the first frame of range-velocity data and the echo signal corresponding to the second frame of range-velocity data are all signals not subject to interference;
wherein the preset threshold is greater than a threshold for performing CFAR processing on the echo signal.

In a possible implementation mode, when it is determined that the echo signal corresponding to the first frame of range-velocity data and the echo signal corresponding to the second frame of range-velocity data are all signals not subject to interference, if the first energy accumulation value is greater than a preset average threshold, determining that the echo signal corresponding to the first frame of range-velocity data contains target information.

In a possible implementation mode, the obtained any two frames of range-velocity data includes a current frame of range-velocity data and a reference frame of range-velocity data, wherein the reference frame is adjacent or not adjacent to the current frame.

Acquiring the difference value between the energy accumulation values of the range gates with the same index value of any two frames of range-velocity data to determine whether the echo signal is interfered includes:
determining an energy accumulation value of a range gate with a preset index value in the current frame of range-velocity data as a first energy accumulation value; determining an energy accumulation value of a range gate with the preset index value in the reference frame of range-velocity data as a second energy accumulation value;
subtracting the second energy accumulation value from the first energy accumulation value to obtain the difference value;
if an absolute value of the difference value is greater than a preset threshold and the difference value is positive, determining that an echo signal corresponding to the current frame of range-velocity data is a signal subject to interference and activating an anti-interference mechanism;
if the absolute value of the difference value is greater than the preset threshold and the difference value is negative, or the absolute value of the difference value is not greater than the threshold, determining that the echo signal corresponding to the current frame of range-velocity data is a signal not subject to interference, and turning off the anti-interference mechanism.

In a fourth aspect, an embodiment of the present application provides a device for interference signal detection, including at least one processor and a memory.

The memory stores computer-executable instructions.

The at least one processor executes the computer-executable instructions stored in the memory such that the at least one processor performs a method as described in the first aspect or any implementation mode of the first aspect, or performs a method as described in the third aspect or any implementation mode of the third aspect.

In a fifth aspect, an embodiment of the present application provides a computer-readable storage medium having computer-executable instructions stored therein, when a processor executes the computer-executable instructions, the processor implements a method as described in the first aspect or any implementation mode of the first aspect, or performs a method as described in the third aspect or any implementation mode of the third aspect.

In a sixth aspect, an embodiment of the present application provides an integrated circuit, including a radio frequency module, an analog signal processing module, and a digital signal processing module sequentially connected.

The radio frequency module is configured to generate a radio frequency transmitting signal and receive a radio frequency echo signal.

The analog signal processing module is configured to perform down-conversion processing on the radio frequency echo signal to obtain an intermediate frequency signal.

The digital signal processing module is configured to perform analog-to-digital conversion on the intermediate frequency signal to obtain a digital signal.

The digital signal processing module is further configured to perform interference signal detection based on the method for interference signal detection described in any embodiment of the application.

In a seventh aspect, an embodiment of the present application provides a radio device, including:
a carrier;
the integrated circuit as described in any embodiment of the present application, which is provided on the carrier;
an antenna, which is provided on the carrier, or is integrated with the integrated circuit as an integral device provided on the carrier.

The integrated circuit is connected to the antenna and configured to transmit the radio frequency transmitting signal and/or receive the radio frequency echo signal.

In an eighth aspect, an embodiment of the present application provides a terminal device, including:
a device body; and
the radio device as described in any embodiment of the present application provided on the device body;
wherein the radio device is configured to enable target detection and/or communication to provide reference information for operation of the device body.

In an embodiment of the present application, a target signal is transmitted based on a radar, N frames of echo signals are received, the N frames of echo signals are signals returned after the target signal is reflected, and N is an integer greater than 1, N pieces of 2D FFT plane information are obtained according to the N frames of echo signals, any piece of 2D FFT plane information includes power information corresponding to a range and a velocity. For any piece of 2D FFT plane information of the N pieces of 2D FFT plane information, the pieces of accumulated power information of the sampling points of M range gates in the any piece of 2D FFT plane information along the dimension of velocity are calculated respectively, a range gate is a scope of range and the M range gates are continuous, wherein M is an integer greater than 1, and a signal subject to interference among the N frames of echo signals is determined according to the pieces of accumulated power information corresponding to the M range gates. In this way, the interference is characterized by the accumulated power information with better robustness, simple operation and low power consumption of the radar system, which can solve the problems of high power consumption and poor timeliness of existing detection methods.

Other aspects may be understood upon reading and understanding the drawings and the detailed description.

### Brief Description of Drawings

The drawings are used to provide an understanding of embodiments of the present application, and form a part of the specification, and are used to explain the technical solutions of the present disclosure together with embodiments of the present application, but not intended to form limitations on the technical solutions of the present application.
FIG. 1 is a schematic diagram of LFMCW radar mutual interference.
FIG. 2 is a schematic diagram of an interfered waveform of LFMCW radar.
FIG. 3 is a schematic diagram of a scenario to which an embodiment of the present application applies.
FIG. 4A is a schematic flowchart of a method for interference signal detection according to an embodiment of the present application.
FIG. 4B is a schematic sub-flowchart of act S404 in FIG. 4A.
FIG. 5 is a schematic diagram of 2D FFT plane information.
FIG. 6a is a single linear frequency modulation signal time domain diagram of an LFMCW radar echo signal without the presence of interference.
FIG. 6b is a schematic diagram of three-dimension information corresponding to 2D FFT plane information of an LFMCW radar echo signal without the presence of interference.
FIG. 6c is a schematic diagram of 2D FFT accumulated power information of each range gate without the presence of interference according to an embodiment of the present application.
FIG. 7a is a single linear frequency modulation signal time domain diagram of an LFMCW radar echo signal with the presence of interference.
FIG. 7b is a schematic diagram of three-dimension information corresponding to 2D FFT plane information of an LFMCW radar echo signal with the presence of interference.
FIG. 7c is a schematic diagram of 2D FFT accumulated power information of each range gate with the presence of interference according to an embodiment of the present application.
FIG. 8 is a schematic diagram of a framework for obtaining 2D FFT plane information.
FIG. 9 is a schematic diagram of the structure of an apparatus for interference signal detection according to an embodiment of the present application.
FIG. 10 is a schematic diagram of the structure of a device for interference signal detection according to an embodiment of the present application.
FIG. 11 is a block diagram of an integrated circuit according to an embodiment of the present application.
FIG. 12 is a schematic diagram of a radio device according to an embodiment of the present application.
FIG. 13 is a schematic flowchart of a method for interference signal detection according to another embodiment of the present application.

### Detailed Description

Multiple embodiments are described in the present application, but the description is exemplary rather than restrictive, and it will be apparent to those of ordinary skills in the art that there may be more embodiments and implementation solutions within the scope contained in the embodiments described herein.

In order to clearly describe the technical solution of the embodiments of the present application, some terms and techniques involved in the embodiments of the present application will be briefly described below.
1) Noise floor: also known as noise floor, which represents the minimum signal strength that the receiver can perceive when the received signal-to-noise ratio is 0 dB (decibel, dB); a receiver sensitivity = a noise floor + a signal-to-noise ratio. Noise limits the minimum signal that a circuit can correctly process, and signals below the noise floor will not be processed correctly.
2) Other terms

In an embodiment of this application, the words "first" and "second" are used to distinguish the same or similar items that have essentially the same function and role. For example, the first chip and the second chip are only for distinguishing different chips, and do not qualify their order of precedence. Those of ordinary skills in the art will appreciate that the words "first", "second" and the like are not limited in number and order of execution, and the words "first", "second" and the like do not necessarily mean different.

It should be noted that the words "exemplary" or "for example" are used in embodiments of this application to indicate examples, illustrations, or descriptions. Any embodiment or design solution described as "exemplary" or "for example" in this application should not be construed as superior or more advantageous than other embodiments or design solutions. Rather, the use of the words "exemplary" or "for example" is intended to present the relevant concepts in a specific manner.

In embodiments of the present application, "at least one" refers to one or more, and "multiple" refers to two or more. "And/or" is used to describe the association of related objects, indicating that there can be three kinds of relationships, for example, A and/or B can indicate: A alone, both A and B, and B alone, where A and B can be singular or plural. The character "/" generally indicates an "or" relationship between the associated objects. "At least one of the following" or its similar expression refers to any combination of these items, including any combination of single items or plural items. For example, at least one of a, b, or c can mean: a, b, c, a and b, a and c, b and c, or a and b and c, where a, b, and c can be single or multiple.

When a representative exemplary embodiment is described, a method and/or process may have already been presented in a specific sequence of acts in the specification. However, to an extent that the method or process does not depend on the specific sequence of the acts herein, the method or process should not be limited to the acts in the specific sequence. Those of ordinary skills in the art will understand that other sequences of acts may also be possible. Therefore, the specific sequence of the acts illustrated in the specification should not be interpreted as a limitation on claims. In addition, the claims directed to the method and/or process should not be limited to performing the acts according to the written sequence. Those skilled in the art may easily understand that these sequences may be changed, and are still maintained in the spirit and scope of the embodiments of the present application.

An LFMCW radar is widely used in such fields as communication, target detection, etc. For example, it can be used in automotive millimeter wave radar system for target detection.

Illustratively, in an automotive millimeter wave radar system, a transmitter continuously transmits a plurality of linear FM (chirp) signals, and a receiver performs down-conversion on the received LFMCW reflected signals to obtain baseband (or intermediate frequency) signals, and then performs 2 Dimension (2D) Fast Fourier Transform (FFT), that is, 2D-FFT, on the baseband signals. Herein, the first dimension is the FFT in each chirp signal, that is, the range dimension FFT; the second dimension is to take out the values at the same spectral line position within the FFT spectrum of all chirp signals, and then perform FFT operation again, i.e., Doppler-dimension (also called velocity dimension) FFT. In this 2D FFT plane thus obtained, targets with different ranges and velocities are presented in the form of peaks at different coordinates of the 2D FFT plane. The stronger the reflection of the target, the higher the peak value will be. In the process of target detection, that is, in the process of searching for a peak in the 2D FFT plane, when the value at a certain coordinate of the 2D FFT is higher than a detection threshold, for example, when the peak value at a certain coordinate is greater than the noise floor of 2D FFT plane, and some specific conditions are met, it can be considered as a target, and the coordinate values of the range dimension and Doppler dimension corresponding to this coordinate correspond to the range and velocity of the target respectively.

Generally speaking, the echo signal received by the receiver of the radar is generally a radio frequency signal, and its frequency is relatively high. Since the sampling frequency needs to be greater than twice the signal frequency so as to restore the sampled signal back without distortion, if the sampling is performed directly on the echo signal received by the receiver, the cost will be very high, so it is necessary to perform down-conversion processing on the echo signal to get the intermediate frequency signal, so that the requirement on the sampling rate is reduced. The baseband signal can be obtained by sampling the intermediate frequency signal.

Illustratively, when a transmitter of a radar transmits a target signal, the transmitter may send a part of the target signal to a mixer in the radar, and the mixer uses the target signal (LO) to perform down-conversion on the received echo signal to obtain an intermediate frequency signal containing target information, such as the range, velocity and other information of the target. Each frame of echo signal can include K chirp signals, each chirp signal is sampled to obtain M equally spaced sampling points. M-points range dimension FFT is performed on K chirp signals to obtain K groups of range dimension M-points FFT information, and pieces of information with the same index value (index value range is 1, 2, ... m ... M) are taken out from K groups of M-points range dimension FFT information to perform K-points Doppler dimension FFT to obtain M groups of K-points Doppler dimension FFT information, that is, 2D FFT plane information.

It may be understood that each frame of echo signal can be processed to obtain a piece of 2D FFT plane information.

In practical application scenarios, when multiple LFMCW radars are used in the same scenario, multiple LFMCW radars will interfere with each other, i.e., interference signals in the shape of spikes or oscillating pulses can be generated in the signals received by the LFMCW radars, which in turn can degrade the working performance of the radar sensors.

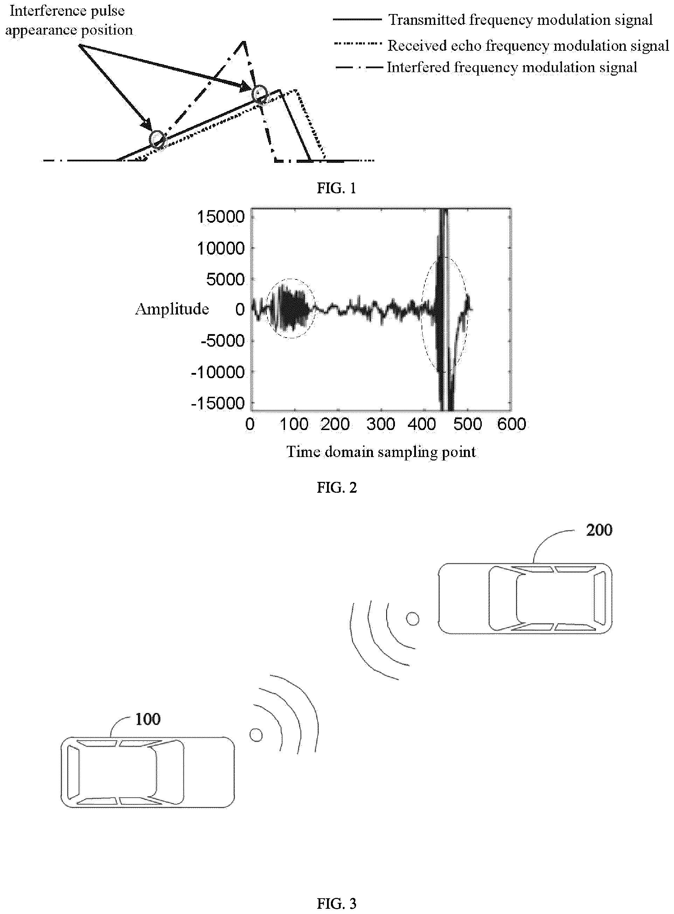

Illustratively, FIG. 1 shows a schematic diagram of LFMCW radar mutual interference. As shown in FIG. 1, because the slope of the interference radar signal (such as the linear frequency modulation continuous wave signal transmitted by other radar systems) is different from that of the locally transmitted frequency modulation signal, the interference is a linear frequency modulation signal, which is low-pass filtered to be generally in the shape of spikes or oscillating pulses. Of course, when the slopes of frequency modulation continuous waves emitted between radar systems are similar or even the same, the resulting interference is more serious. At the same time, the above-mentioned interference may occur between the transmitted signals, between the echo signals, and/or between the transmitted signals and the echo signals of different radars.

Illustratively, FIG. 2 shows a schematic diagram of an interfered waveform of LFMCW radar, where the waveforms of different interference signals are marked by dashed boxes, and different interference signals can have widely different amplitudes, and the amplitudes of the interference signals can be similar to those of normal signals. Since pulse interference can raise the noise floor of the spectrum or form false alarm targets, which can adversely affect the detection results of the radar (e.g., fail to identify the target or incorrectly identify the target), it is necessary to identify whether the current signal is being interfered with so that appropriate measures can be carried out to remove the interference signal.

In some implementations, time-frequency analysis methods are used for performing interference feature extraction according to the characteristic that the interference signal is a linear frequency modulation signal, i.e., the frequency varies linearly with time. Illustratively, STFT is used for extracting interference features, that is, real-time STFT calculation is performed based on the data of each sampling point in each chirp signal in the frame signal, and whether the energy of each sampling point has abrupt change is determined in turn. If the energy abrupt change is found after the data processing of each sampling point is completed, it is considered that there is interference. However, such a real-time STFT calculation of each sampling point data needs a significant computational load, demanding high real-time performance of the system, and the interference situation can be determined only after the data of each sampling point is processed, and the timeliness is also poor.

In view of this, an embodiment of the present application provides a method for interference signal detection, whether the current frame signal is interfered is determined by calculating the accumulated power information of the dimension of velocity of each range gate in the 2D FFT plane information, and comparing the pieces of accumulated power information of the range gates with the same index value between different 2D FFTs. The interference is characterized by the accumulated power information, which has good robustness and simple operations, and can achieve low power consumption of the radar system.

FIG. 3 shows a schematic diagram of a scenario to which an embodiment of the present application applies. This scenario can include multiple frequency modulation continuous wave (FMCW) radars, or multiple sensors of any type transmitting FMCW waves may be applicable, and there may be mutual interference between radar signals in the scenario.

A radar is an electronic device that uses electromagnetic waves to detect targets, or is referred to as an radar apparatus, or can also be referred to as a detector or detection apparatus. Its working principle is that the radar irradiates the target object (referred to as the target) by transmitting electromagnetic waves (also known as transmitting signals or detecting signals) through the transmitter, and the receiver of the radar receives the echo signals reflected by the target object and displays its echo signals on the display of the radar, thus obtaining the range, rate of change of range (radial velocity), azimuth and other information from the target to the point of the electromagnetic wave emission.

As shown in FIG. 3, the main device 100 and the interference device 200 may be any radar-mounted device, such as a motor vehicle, an unmanned aircraft, a railcar, an air conditioner, a velocity measuring apparatus, or a network device (such as a base station, a terminal device in various systems), etc. Embodiments of the present application are applicable to scenarios where there is interference between devices with radar installed. Embodiments of the present application are not limited to the location and function of the radar installation.

Embodiments of the present application are illustrated with the main device 100 and the interference device 200 as motor vehicles which does not constitute a limitation on the embodiments of the present application.

The radar in the main device 100 may detect the interference signal in the main device 100 generated by the radar interference of the interference device 200 based on the method for interference signal detection according to an embodiment of the present application.

Illustratively, the method for interference signal detection may include: transmitting a target signal based on a radar, receiving N frames of echo signals, wherein the N frames of echo signals are signals returned after the target signal is reflected, N is an integer greater than 1, obtaining N pieces of 2D FFT plane information according to the N frames of echo signals, wherein any piece of the 2D FFT plane information includes power information corresponding to a range and a velocity (i.e., power information corresponding to range-velocity coordinate points, and one range-velocity coordinate point corresponds to one sampling point); for any piece of 2D FFT plane information of the N pieces of 2D FFT plane information, calculating pieces of accumulated power information of M range gates in the any piece of 2D FFT plane information along the dimension of velocity respectively, wherein a range gate is a sampling point, and M is an integer greater than 1, determining a signal subject to interference among the N frames of echo signals according to the pieces of accumulated power information corresponding to the M range gates. In this way, the interference is characterized by the accumulated power information, which has good robustness and simple operations, and can achieve low power consumption of the radar system.

The technical solutions of embodiments of the present application are described in detail by specific embodiments. The following embodiments may be implemented in conjunction with each other or independently of each other and may not be repeated in some embodiments for the same or similar concepts or processes.

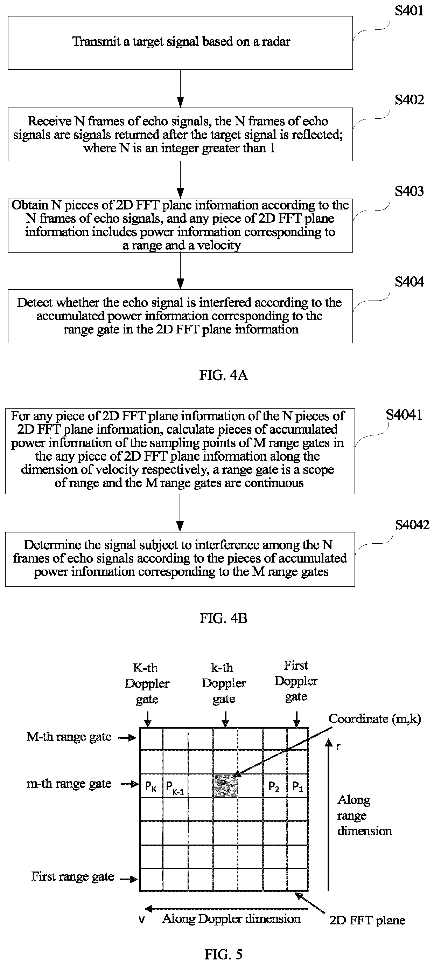

FIG. 4A is a schematic flowchart of a method for interference signal detection according to an embodiment of the present application. As shown in FIG. 4A, the method may include following acts.

In S401, a target signal is transmitted based on a radar.

Among them, the radar can be a millimeter wave radar, which refers to a radar operating in the millimeter wave frequency band. Usually, millimeter wave refers to the frequency domain of 30 ~ 300 gigahertz (GHz) (wavelength is 1 ~ 10mm). For example, the frequency of automobile millimeter wave radar is mainly in 77GHz band. The target signal can be a sequence of chirp signals with uniformly equal time intervals.

In an embodiment of the present application, a target signal (the target signal is used for detecting the target, which can also be referred to as the detection signal) can be transmitted when the device installed with the radar activates a related function of target detection. Illustratively, the LFMCW radar transmits a sequence of chirp signals with uniformly equal time intervals when the user activates functions such as reverse driving or navigation in a car. Embodiments of the present application are not limited to specific use scenarios.

In S402, N frames of echo signals are received, the N frames of echo signals are signals returned after the target signal is reflected; where N is an integer greater than 1.

In embodiments of the present application, each frame of echo signal may include a plurality of chirp signals which may be transmitted by one or more transmitting antennas.

Illustratively, a target signal transmitted by an LFMCW radar is reflected back to the radar by the target object, and the radar receives the reflected signal, i.e., the echo signal. The target object can be a target to be detected, such as obstacles, pedestrians, signal apparatus and any other objects that can reflect the target signal, which is not specifically limited in this application.

In S403, N pieces of 2D FFT plane information are obtained according to the N frames of echo signals, and any piece of 2D FFT plane information includes power information corresponding to a range and a velocity.

Herein, power information can be converted to energy information.

In a possible implementation, for an FMCW radar (or sensor), a baseband signal (intermediate frequency signal) is obtained by down-conversion (or mixing) processing of the echo signal, and then a signal obtained by performing analog to digital converter (ADC) and other operations on the baseband signal is then subjected to 2-dimension Fourier transform, and the corresponding 2D FFT plane information, i.e., range-velocity (or Doppler) data, can be obtained.

Illustratively, FIG. 5 shows a schematic diagram of 2D FFT plane information, as shown in FIG. 5, the 2D FFT plane information may include information of a range dimension, information of a velocity dimension (which may also be called a Doppler dimension), and power information corresponding to the range and velocity of the target object, the information of the range dimension includes, for example, information of M range gates, and the information of the velocity dimension includes, for example, information of K Doppler gates. According to the method for interference signal detection in an embodiment of the present application, on the basis of the above range-velocity data (including the data of M×K sampling points on the 2D FFT plane, including the power information of the sampling points), by accumulating the energies of each range gate, and based on the energy accumulation value, whether each frame of echo signal is interfered or not is determined, wherein, the magnitude of the energy can be characterized by the magnitude of the power value, and the energy accumulation value can also be a kind of accumulated power information.

A range gate is a scope of range, and a range gate represents a scope where at least one sampling point on the range dimension is located. Referring to the example of FIG. 5, in this example, there are M range gates, and there are M sampling points on the range dimension, and each range gate corresponds to a scope where one sampling point on the range dimension is located. The scope where at least one sampling point on the range dimension is located represented by the range gate can be represented by the range dimension index value of the at least one sampling point.

In S404, whether the echo signal is interfered is detected according to the accumulated power information corresponding to the range gate in the 2D FFT plane information.

The accumulated power information corresponding to the range gate is accumulated power information of the sampling points of the range gate in the 2D FFT plane information along the dimension of velocity, and a range gate is a scope of range.

In a possible implementation, detecting whether the echo signal is interfered according to the accumulated power information corresponding to the range gate in the 2D FFT plane information includes determining whether a current frame of echo signal is interfered by the following means.

Based on the 2D FFT plane information of the current frame of echo signal and a reference frame of echo signal among the N frames of echo signals, subtracting, from the pieces of accumulated power information corresponding to the range gates with L index values in the current frame of echo signal, the pieces of accumulated power information corresponding to the range gates with the same index values in the reference frame of echo signal, respectively, to obtain L difference values.

When a set condition is met, that the current frame of echo signal is interfered is determined; the set condition is: "the absolute value of at least one of the L difference values is greater than a first threshold and is positive" or "the absolute values of the L difference values are all greater than the first threshold and are positive".

The reference frame of echo signal is a frame of echo signal adjacent or non-adjacent to the current frame of echo signal; 1≤L≤M, M is the total number of range gates in 2D FFT plane information.

In a possible implementation, detecting whether the echo signal is interfered according to the accumulated power information corresponding to the range gate in the 2D FFT plane information includes determining whether a current frame of echo signal is interfered by the following means.

Based on the 2D FFT plane information of the current frame of echo signal, the accumulated power information corresponding to each of the range gates with L index values in the current frame of echo signal is calculated, 1≤L≤M, M is the total number of range gates in 2D FFT plane information.

When a set condition is met, that the current frame of echo signal is interfered is determined; the setting condition is that "at least one of the pieces of accumulated power information is greater than a second threshold" or "all of the pieces of accumulated power information is greater than the second threshold".

In a possible implementation, as shown in FIG. 4B, the above act S404 may be implemented by a sub-flow including the following acts S4041 and S4042.

In act S4041, for any piece of 2D FFT plane information of the N pieces of 2D FFT plane information, pieces of accumulated power information of the sampling points of M range gates in the any piece of 2D FFT plane information along the dimension of velocity respectively are calculated, the M range gates are continuous; where M is an integer greater than 1.

Herein, the dimension of velocity can also be called Doppler dimension, and for the convenience of presentation, it is collectively referred to as Doppler dimension below.

In a possible implementation, in any piece of 2D FFT plane information, the pieces of power information of sampling points of any range gate along the Doppler dimension is taken out and summed to obtain the accumulated power information of the any range gate.

Illustratively, as shown in FIG. 5, a range gate on the 2D FFT plane has K sampling points in the dimension of velocity (i.e., Doppler dimension), and the accumulated power information corresponding to the range gate is the sum of the pieces of power information of the K sampling points. For example, the power information of the m-th range gate along the dimension of velocity may be, for example, the power information P₁, P₂... P_{K} of K sampling points included in the range gate, and the power information P₁, P₂... P_{K} are summed to obtain the accumulated power information of the sampling points along the dimension of velocity of the m-th range gate, which is also referred to as the accumulated power information corresponding to the m-th range gate, the accumulated power information in the m-th range gate, or the accumulated power information of the m-th range gate.

It can be understood that in the present embodiment the accumulated power information of any range gate is calculated. In other implementations, a portion of the pieces of power information of the sampling points in the Doppler dimension of the range gate may also be selected for sum operation. It is also possible to calculate only the accumulated power information of a specific range gate when calculating the accumulated power information of a range gate.

Illustratively, the echo signal may first be subjected to 2D-FFT processing to obtain at least two frames of range-velocity data; then, for each frame of range-velocity data, the energies of various range gates are accumulated along the velocity dimension respectively to obtain the energy accumulation value of each range gate. Then, it is determined whether the echo signal corresponding to each frame of range-velocity data is interfered or not based on comparing the magnitudes of the energy accumulation values of the range gates with a same index value between different frames of range-velocity data.

In the above embodiment, when comparing any two frames of range-velocity data, a preset number of range gates or range gates with preset index values can be selected for comparison, or all the range gates can be compared one by one, and whether each frame of echo signal is interfered can be determined based on the comparison result and the preset threshold scope, and the specific can be set according to actual needs.

In act S4042, the signal subject to interference among the N frames of echo signals is determined according to the pieces of accumulated power information corresponding to the M range gates.

In a possible implementation, a difference operation is performed between the accumulated power information of the range gate in any frame of echo signal and the preset accumulated power information, and the signal subject to interference in N frames of echo signals is determined according to the result of the difference operation.

In another possible implementation, a difference operation is performed on the pieces of accumulated power information of the range gates with the same index value between different frames of echo signals, and the signal subject to interference among N frames of echo signals is determined according to the result of the difference operation.

For a sensing system, if it is desired to determine in real time whether the current frame of echo signal is interfered, the range-velocity data corresponding to the previous frame of echo signal can be selected for comparison, and if it is determined that the energy accumulation values of all or majority of the range gates in the current frame are greater than the energy accumulation values of the corresponding range gates of the previous frame, and the increased energy value is greater than a preset threshold, it can be determined that the current frame is interfered, and then measures such as activating an interference suppression apparatus can be carried out to reduce or avoid the subsequent echo signal being interfered by the signals emitted by other sensing systems. If the above conditions cannot be satisfied, for example, if the increased energy value is less than the above preset threshold, it is determined that the current frame of echo signal is not interfered.

In an example, all range gates in two frames participate in the comparison, and when the increased values of the energy accumulation values of all range gates are all greater than the preset threshold, it is determined that the current frame is interfered. In practical application, some interference judgments may be missed. In another example, when the increased values of the energy accumulation values of majority of range gates in two frames are greater than the preset threshold, it is determined that the current frame is interfered. For example, the majority of range gates can be, for example, greater than, say, 60% or 70% of the range gates, and the specific proportion can be fixed or variable values set for different application scenarios based on experience or big data analysis.

Accordingly, if the increased energy value is less than the preset threshold, but greater than the threshold for conducting constant false alarm (CFAR) processing or other threshold for target judgment, it can be considered that the currently received echo signal contains target information, and further verification of the target detection result can be achieved.

It is to be noted that the above judgment result is based on prior foreknowledge that the previous frame of echo signal is a signal not subject to interference, and if the prior foreknowledge is that the previous frame of echo signal is a signal subject to interference, by the same judgment comparison act, when the increased energy value is positive, and when the increased energy value, although negative, corresponds to a smaller absolute value (e.g., less than a preset threshold), it is still judged that the current frame of echo signal is a signal subject to interference, at this time, if the interference suppression apparatus is not activated, the interference suppression apparatus will be activated, and if it has been activated, the same state will remain unchanged. If the increased energy value is negative and the corresponding absolute value is greater than the above threshold or another set threshold, the current frame of echo signal can be considered to return to normal from the interfered state, and the interference suppression apparatus can be turned off or kept in a non-working state at this time.

In summary, in an embodiment of the present application, based on at least two frames of range-velocity data obtained by 2D-FFT processing of the echo signal, the energy of each range gate is accumulated along the velocity dimension, and then the difference value between the energy accumulation values of the range gates with a same index value (or serial number) between different frames of range-velocity data is compared, so as to determine whether the echo signal corresponding to each frame of range-velocity data is interfered or not. Generally speaking, if the difference value between the energy accumulation values changes abruptly (for example, the absolute value of the difference value is greater than the preset threshold), it can be determined that the echo signal corresponding to one frame of range-velocity data is a signal subject to interference. As for the position relation of the echo signals corresponding to the two frames of distance-velocity data for comparison, this is not restricted in an embodiment of the present application, and the echo signals can be echo signals corresponding to two consecutive frames of distance-velocity data, or echo signals corresponding to two frames of distance-velocity data separated by several time periods, or even the echo signal corresponding to a specific (or preset) frame of distance-velocity data can be used as a reference and the echo signals corresponding to other frames of range-velocity data are compared one by one with the echo signal corresponding to the specific frame of distance-velocity data, so that it can be quickly determined whether the echo signal corresponding to the compared frame of distance-velocity data is an interfered frame of signal, or even it can be roughly determined whether the echo signal corresponding to that frame of distance-velocity data contains target information, etc. Similarly, when comparing two frames of range-velocity data, an embodiment of the present application may not limit the number of range gates to be compared, and either all range gates in a frame of distance-velocity data may participate in the comparison or a part of range gates may participate in the comparison. If a part of range gates are selected for comparison, the specific adjustment can be made according to actual requirements, as long as the purpose of comparison can be achieved.

Illustratively, taking the vehicle-mounted millimeter wave radar as an example, when aiming at special application scenarios with relatively stable scenario environment such as highway and parking lot, it is also possible to set a total energy value for range gates (that is, the energy accumulation value obtained by selecting two or more range gates for accumulation) to be used as a reference for comparison with different frames, in conjunction with the target range and velocity, etc.so as to determine and process more quickly and accurately. It is difficult to determine the interference that causes the gradual change of multiple frames in the scheme of comparing adjacent frames, but it can be determined by comparing the energy accumulation value of the range gate of the current frame with the set reference value.

To sum up, an embodiment of the present application provides a method for interference signal detection, the method includes: transmitting a target signal based on a radar; receiving N frames of echo signals, wherein the N frames of echo signals are signals returned after the target signal is reflected, and N is an integer greater than 1; obtaining N pieces of 2D FFT plane information according to the N frames of echo signals, wherein any piece of 2D FFT plane information includes power information corresponding to a range and a velocity; for any piece of 2D FFT plane information of the N pieces of 2D FFT plane information, calculating pieces of accumulated power information of M range gates in the 2D FFT plane information along the dimension of velocity respectively, wherein a range gate is a sampling point in the range dimension and M is an integer greater than 1; and determining whether there is a signal subject to interference among the N frames of echo signals according to the pieces of accumulated power information corresponding to the M range gates. In this way, the interference is characterized by the accumulated power information, which has good robustness, simple operation and fast speed, and can achieve low power consumption and good efficiency of the radar system.

It should be noted that the numbers of range gates and Doppler gates corresponding to each frame of echo signal in an embodiment of the present application are the same, and the processing acts of various signals and data are also the same, so that interference signals can be accurately determined when different frames are compared.

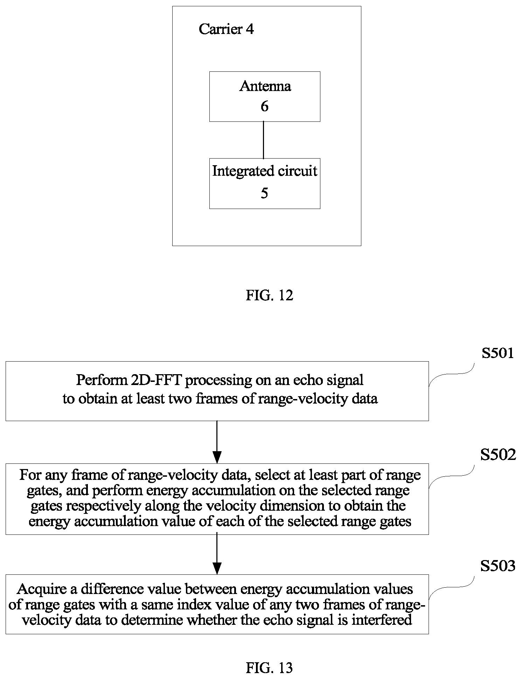

Specifically, as added in FIG. 13, the present application provides a method for interference signal detection, which can be applied to FMCW sensors. The method may include following acts S501, S502 and S503.

In Act S501, 2D-FFT processing is performed on an echo signal to obtain at least two frames of range-velocity data.

In Act S501, for any frame of range-velocity data, at least part of range gates are selected, and energy accumulation is performed on the selected range gates respectively along the velocity dimension to obtain the energy accumulation value of each of the selected range gates.

In Act S503, a difference value between energy accumulation values of range gates with a same index value of any two frames of range-velocity data is acquired to determine whether the echo signal is interfered.

The act of determining whether the echo signal is interfered may be determining whether the echo signal corresponding to each frame of range-velocity data is interfered.

According to the embodiment, for two frames of echo signals, it is determined whether there is an interfered frame of signal or not by comparing the difference value between the energy accumulation values of the range gates with the same serial number. If there is an abrupt change in the energy accumulation values of the range gates with the same serial number in different frames, it means that there is a frame interfered.

Optionally, acquiring the difference value between the energy accumulation values of the range gates with the same index value of any two frames of range-velocity data to determine whether the echo signal is interfered includes following operations.

An energy accumulation value of a range gate with a preset index value in a first frame of range-velocity data is determined as a first energy accumulation value; an energy accumulation value of a range gate with the preset index value in a second frame of range-velocity data is determined as a second energy accumulation value.

The second energy accumulation value is subtracted from the first energy accumulation value to obtain the difference value.

If the absolute value of the difference value is greater than a preset threshold and the difference value is positive, it is determined that the echo signal corresponding to the first frame of range-velocity data is a signal subject to interference and the echo signal corresponding to the second frame of range-velocity data is a signal not subject to interference.

If the absolute value of the difference value is greater than the preset threshold and the difference value is negative, it is determined that the echo signal corresponding to the second frame of range-velocity data is a signal subject to interference, and the echo signal corresponding to the first frame of range-velocity data is a signal not subject to interference.

Optionally, acquiring the difference value between the energy accumulation values of the range gates with the same index value of any two frames of range-velocity data to determine whether the echo signal is interfered further includes: if the absolute value of the difference value is less than or equal to the preset threshold, determining that the echo signal corresponding to the first frame of range-velocity data and the echo signal corresponding to the second frame of range-velocity data are all signals not subject to interference; wherein the preset threshold is greater than a threshold for performing CFAR processing on the echo signal.

A range gate with the preset index value may be a range gate with a preset single index value or a range gate with a plurality of preset index values, such as a range gate with index values of 5 to 7. Optionally, the obtained any two frames of range-velocity data includes a current frame of range-velocity data and a reference frame of range-velocity data, wherein the reference frame is adjacent or not adjacent to the current frame; the acquiring the difference value between the energy accumulation values of the range gates with the same index value of any two frames of range-velocity data to determine whether the echo signal is interfered includes following operations.

An energy accumulation value of a range gate with a preset index value in the current frame of range-velocity data is determined as a first energy accumulation value; an energy accumulation value of a range gate with the preset index value in the reference frame of range-velocity data is determined as a second energy accumulation value.

The second energy accumulation value is subtracted from the first energy accumulation value to obtain the difference value.

If the absolute value of the difference value is greater than a preset threshold and the difference value is positive, it is determined that the echo signal corresponding to the current frame of range-velocity data is a signal subject to interference and an anti-interference mechanism is activated.

If the absolute value of the difference value is greater than the preset threshold and the difference value is negative, or the absolute value of the difference value is not greater than the threshold, it is determined that the echo signal corresponding to the current frame of range-velocity data is a signal not subject to interference, and the anti-interference mechanism is turned off.

Optionally, when it is determined that the echo signal corresponding to the first frame of range-velocity data and the echo signal corresponding to the second frame of range-velocity data are all signals not subject to interference, if the first energy accumulation value is greater than a preset average threshold, it can be determined that the echo signal corresponding to the first frame of range-velocity data contains target information. The above preset average threshold can be based on big data analysis. In special application scenarios, when there is no interference and no target information, the preset average threshold can be the average value of energy accumulation values corresponding to one or some range gates in a frame of signal.

Optionally, based on the embodiment corresponding to FIG. 4A, in a possible implementation, determining the signal subject to interference among the N frames of echo signals according to the pieces of accumulated power information corresponding to the M range gates includes following operations.

For any first frame of echo signal and second frame of echo signal among the N frames of echo signals, the difference values between the pieces of accumulated power information of the first frame of echo signal and the second frame of echo signal in the range gates with a same index value (i.e., the pieces of accumulated power information corresponding to the range gates) are respectively calculated and the absolute values thereof are taken to obtain L absolute difference values; where L is an integer greater than 1 and less than or equal to M; when there is a target absolute difference value greater than a first threshold among the L absolute difference values, the echo signal with greater accumulated power information in a target range gate among the first frame of echo signal and the second frame of echo signal is determined as the signal subject to interference; the target range gate is the range gate when the target absolute difference value is calculated, that is, the range gate for which the calculated absolute difference value is the target absolute difference value.

The first frame of echo signal and the second frame of echo signal may be any two frames of echo signals among the N frames of echo signals, for example, they may be adjacent two frames of echo signals, or they may be two frames of echo signals spaced by a plurality of frames. The range gates with a same index value may be the range gates corresponding to a same range dimension index value in different frames of echo signals, the scopes of the range dimension index values in different frames of echo signals are the same, and the scope of the range dimension index values may be 1, 2... m... M, for example, the m-th range gate in the first frame of echo signal and the m-th range gate in the second frame of echo signal are the range gates with the same index value.

In an embodiment of the present invention, the difference values between the pieces of accumulated power information of the first frame of echo signal and the second frame of echo signal in the range gates with a same index value are respectively calculated, and the absolute values of the obtained plurality of difference values are respectively compared with the first threshold to determine whether there is a signal subject to interference in the first frame of echo signal and the second frame of echo signal, and the echo signal with greater accumulated power information in the target range gate is determined as the signal subject to interference. In this way, the signal subject to interference can be determined based on the accumulated power information of range dimension, which is simple in operation, can effectively reduce the consumption of data resources, achieve low power consumption of the radar system with high timeliness.

Optionally, the first frame of echo signal is a signal received prior to the second frame of echo signal, the method further includes: if it is determined that the first frame of echo signal among the first frame of echo signal and the second frame of echo signal is a signal subject to interference, turning off an anti-interference mechanism; if it is determined that the second frame of echo signal among the first frame of echo signal and the second frame of echo signal is a signal subject to interference, activating the anti-interference mechanism.

In an embodiment of the present application, the first frame of echo signal is a signal received prior to the second frame of echo signal, for example, the first frame of echo signal is the previous frame of echo signal, and the second frame of echo signal is the current frame of echo signal. The anti-interference mechanism may be an anti-interference measure in a radar system, and the anti-interference measure may be, for example, "wide-limit-narrow" anti-broadband noise FM interference.

Illustratively, when the current frame of echo signal is determined to be a signal subject to interference, the anti-interference mechanism is activated to start suppressing the interference. When it is confirmed that the previous frame of echo signal is the signal subject to interference, that is, the interference has ended by the time of the current frame of echo signal, the anti-interference mechanism is turned off.

In an embodiment of the present application, the anti-interference mechanism is activated when the signal subject to interference is detected, and the anti-interference mechanism is turned off when there is no signal subject to interference. Compared with the anti-interference mechanism being turned on all the time, the running time of the anti-interference mechanism is reduced, thereby reducing the negative influence of the anti-interference mechanism on the radar system.

Optionally, determining the signal subject to interference among the N frames of echo signals according to the pieces of accumulated power information corresponding to the M range gates includes following operations.

For any third frame of echo signal and fourth frame of echo signal among the N frames of echo signals, the absolute value of the power difference value between the third frame of echo signal and the fourth frame of echo signal in a first range gate is calculated to obtain the first absolute difference value, wherein the first range gate is any one of the M range gates; when the first absolute difference value is greater than the first threshold, the echo signal with greater accumulated power information among the third frame of echo signal and the fourth frame of echo signal at the time of the calculation of the first range gate is determined as the signal subject to interference, that is, the echo signal with greater accumulated power information corresponding to the first range gate in the third frame of echo signal and the fourth frame of echo signal is the signal subject to interference.

The third frame of echo signal and the fourth frame of echo signal may be any two frames of echo signals among the N frames of echo signals, for example, they may be adjacent two frames of echo signals, or they may be two frames of echo signals spaced by a plurality of frames. The power difference value is the difference value between the pieces of accumulated power information of the two frames of echo signals in the range gates with a same index value, and the first absolute difference value refers to the absolute value of the power difference value.

In a possible implementation, only the first difference absolute value of any two echo signals in the N frames of echo signals in any range gates with a same index value can be calculated.

It can be understood that the power accumulation information corresponding to any range gate with the presence of interference is greater than the power accumulation information corresponding to the range gate without the presence of interference.

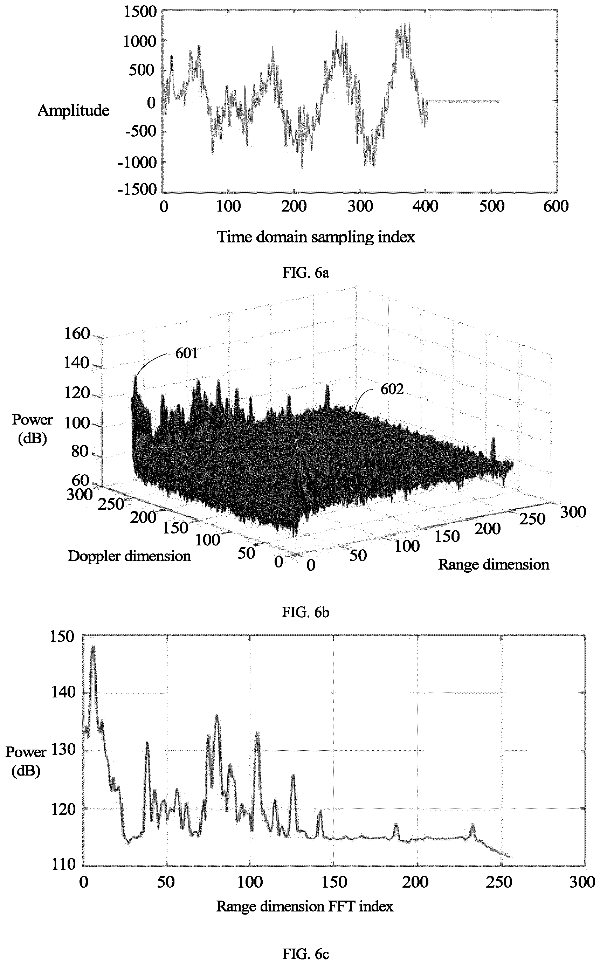

Illustratively, FIG. 6a shows a single linear frequency modulation signal time domain diagram of an LFMCW radar echo signal without the presence of interference. As shown in FIG. 6a, the figure includes time information and amplitude information, and both positive and negative amplitudes are within 1500. On the basis of FIG. 6a, FIG. 6b shows a schematic diagram of three-dimension information corresponding to 2D FFT plane information of an LFMCW radar echo signal without the presence of interference, as shown in FIG. 6b, the figure includes the corresponding relationship among range dimension, Doppler dimension and power. A high power peak ( a raised area in the figure) 601 corresponds to a target detected by the radar, and a low power peak ( a flat area in the figure) 602 can correspond to the noise floor of the 2D FFT plane information. As shown in FIG. 6b, without the presence of interference, the power peak corresponding to the noise floor of the 2D FFT plane information is low and neat. On the basis of FIG. 6b, FIG. 6c shows a schematic diagram of 2D FFT accumulated power information of each range gate without the presence of interference according to an embodiment of the present application. As shown in FIG. 6c, the figure includes accumulated power information and range dimension information, where the accumulated power information corresponding to each range gate is almost all less than 140 dB.

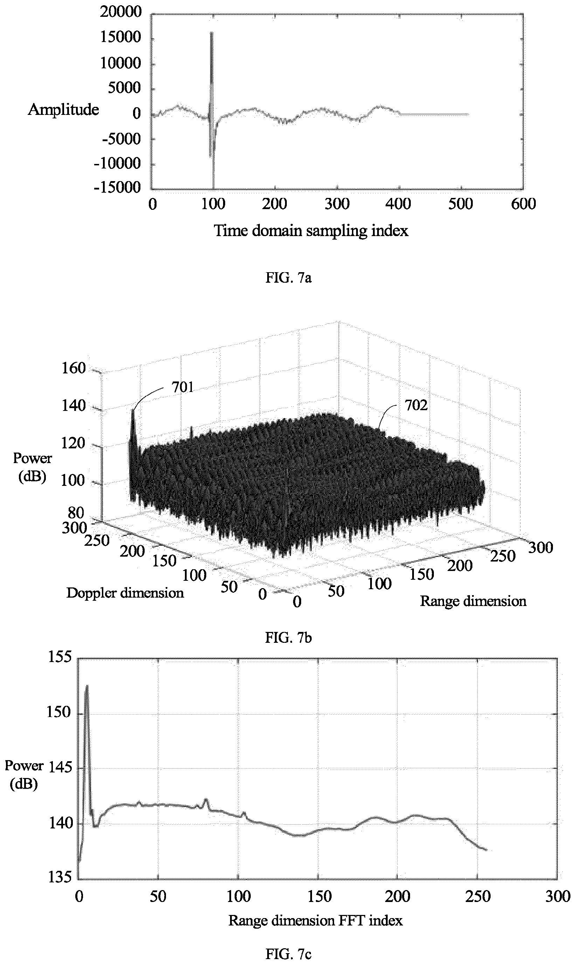

Illustratively, FIG. 7a shows a single linear frequency modulation signal time domain diagram of an LFMCW radar echo signal with the presence of interference. As shown in FIG. 7a, the figure includes time information and amplitude information, and the positive and negative amplitudes are about 15000, which are more than 10 times of the positive and negative amplitudes without the presence of interference. On the basis of FIG. 7a, FIG. 7b shows a schematic diagram of three-dimension information corresponding to 2D FFT plane information of an LFMCW radar echo signal with the presence of interference, as shown in FIG. 7b, the figure includes the corresponding relationship among range dimension, Doppler dimension and power. A high power peak (a raised area in the figure) 701 corresponds to a target detected by the radar, and a low power peak ( a flat area in the figure) 702 can correspond to the noise floor of the 2D FFT plane information. As shown in FIG. 7b, with the presence of interference, the power peak corresponding to the noise floor of 2D FFT plane information is significantly higher compared with the case without the presence of interference. On the basis of FIG. 7b, FIG. 7c shows a schematic diagram of 2D FFT accumulated power information of each range gate with the presence of interference according to an embodiment of the present application. As shown in FIG. 7c, the figure includes accumulated power information and range dimension information. Based on FIGS. 6c and 7c, it can be seen that, due to the influence of interference signals, the power accumulation information corresponding to any range gate with the presence of interference is greater than the power accumulation information corresponding to the range gate without the presence of interference.

In an embodiment of the present application, the first difference absolute value between any two frames of echo signals in the N frames of echo signals in range gates with any same index value is calculated, and then the first difference absolute value is compared with the first threshold to determine the signal subject to interference, so that the amount of calculation of the accumulated power information of the range gate can be reduced, and the power consumption of the system can be further reduced.

Optionally, determining the signal subject to interference among the N frames of echo signals according to the pieces of accumulated power information corresponding to the M range gates includes following operations.

When there is accumulated power information greater than a second threshold among the pieces of accumulated power information corresponding to the M range gates of a fifth frame of echo signal among the N frames of echo signals, it is determined that the fifth frame of echo signal is a signal subject to interference.

The second threshold may be accumulated power information preset based on a specific scenario, the specific scenario can be, for example, highway, parking lot and other scenarios with relatively stable environmental conditions. The fifth frame of echo signal may be any one of the N frames of echo signals.

In an embodiment of the present application, the signal subject to interference is determined by comparing the accumulated power information of any range gate of any of the N frames of echo signals with the accumulated power information preset based on a specific scenario, so that the comparison with the range gates in other frames of echo signals is skipped, and the more targeted comparison based on the specific scenario can effectively improve the efficiency and accuracy of interference signal detection.

Optionally, obtaining the N pieces of 2D FFT plane information according to the N frames of echo signals includes following operations.

Down-conversion processing is performed on the N frames of echo signals respectively to obtain N intermediate frequency signals; sampling and two-dimension fast Fourier transform are performed on the N intermediate frequency signals respectively to obtain the N pieces of 2D FFT plane information.

In an embodiment of the present application, N pieces of 2D FFT plane information are obtained by processing the N frames of echo signals, so that the signal subject to interference can be determined subsequently based on the N pieces of 2D FFT plane information, so that the signal subject to interference can be determined after the echo signal is processed into 2D FFT plane information, which does not require high real-time performance.

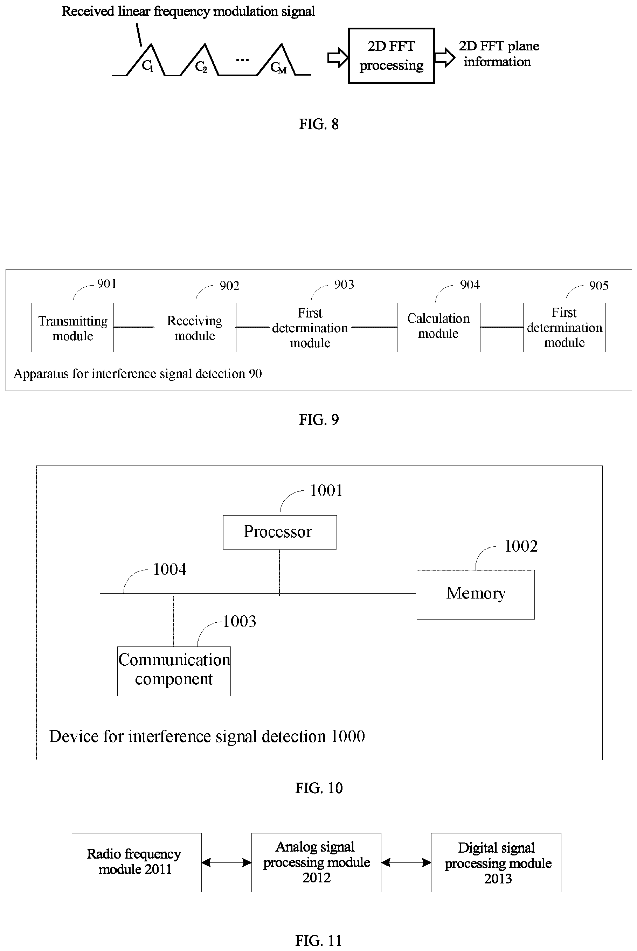

Illustratively, FIG. 8 illustrates a schematic diagram of a framework for obtaining 2D FFT plane information. As shown in FIG. 8, 2D FFT processing is performed on the received linear frequency modulation signal to obtain 2D FFT plane information. This act is the same as or similar to the above acts S402 to S403, and will not be repeated here.

FIG. 9 is a schematic diagram of the structure of an apparatus for interference signal detection according to an embodiment of the present application. As shown in FIG. 9, the apparatus for interference signal detection 90 includes a transmitting module 901, a receiving module 902, a first determination module 903, a calculation module 904 and a second determination module 905.

The transmitting module 901 is used for transmitting a target signal based on a radar.

The receiving module 902 is used for receiving N frames of echo signals, wherein the N frames of echo signals are signals returned after the target signal is reflected, N is an integer greater than 1.

The first determination module 903 is used for obtaining N pieces of 2D FFT plane information according to the N frames of echo signals, and any piece of 2D FFT plane information includes power information corresponding to a range and a velocity.

The calculation module 904 is used for, for any piece of 2D FFT plane information of the N pieces of 2D FFT plane information, calculating pieces of accumulated power information of the sampling points of M range gates in the any piece of 2D FFT plane information along the dimension of velocity respectively, wherein the range gate is a scope of range and the M range gates are continuous, M is an integer greater than 1.

The second determination module 905 is used for determining a signal subject to interference among the N frames of echo signals according to the pieces of accumulated power information corresponding to the M range gates.

Optionally, the second determination module 905 is specifically used for following operations: for any first frame of echo signal and second frame of echo signal among the N frames of echo signals, respectively calculating a difference value between pieces of accumulated power information of the first frame of echo signal and the second frame of echo signal in the range gates with a same index value and taking an absolute value thereof to obtain L absolute difference values, where L is an integer greater than 1 and less than or equal to M; when there is a target absolute difference value greater than a first threshold among the L absolute difference values, determining an echo signal with greater accumulated power information in a target range gate among the first frame of echo signal and the second frame of echo signal is the signal subject to interference; wherein the target range gate is the range gate when the target absolute difference value is calculated, that is, the range gate for which the calculated absolute difference value is the target absolute difference value.

Optionally, the first frame of echo signal is a signal received prior to the second frame of echo signal, and the apparatus for interference signal detection 90 further includes: a judgment module, which is used for turning off an anti-interference mechanism if the first frame of echo signal is a signal subject to interference; activating the anti-interference mechanism if the second frame of echo signal is a signal subject to interference.

Optionally, the second determination module 905 is specifically used for following operations: for any third frame of echo signal and fourth frame of echo signal among the N frames of echo signals, calculating a power difference value between the third frame of echo signal and the fourth frame of echo signal in a first range gate and taking the absolute value thereof to obtain the first absolute difference value, wherein the first range gate is any one of the M range gates; when the first absolute difference value is greater than the first threshold, determining the echo signal with greater accumulated power information among the third frame of echo signal and the fourth frame of echo signal at the time of the calculation of the first range gate is the signal subject to interference. Wherein, the power difference value is the difference value between the pieces of accumulated power information of the two frames of echo signals in the first range gate.

Optionally, the second determination module 905 is specifically used for following operations: when there is a piece of accumulated power information greater than a second threshold among the pieces of accumulated power information corresponding to the M range gates of a fifth frame of echo signal among the N frames of echo signals, determining that the fifth frame of echo signal is a signal subject to interference. Wherein, the fifth frame of echo signal may be any one of the N frames of echo signals, and the second threshold may be accumulated power information preset based on a specific scenario.

Optionally, the first determination module 903 is specifically used for performing down-conversion processing on the N frames of echo signals respectively to obtain N intermediate frequency signals; performing sampling and two-dimension fast Fourier transform on the N intermediate frequency signals respectively to obtain the N pieces of 2D FFT plane information.

Optionally, the radar is a millimeter wave radar.

The apparatus for interference signal detection according to an embodiment of the present application can be used to perform the above method embodiment, and has similar implementation principles and technical effects, which will not be repeated here.

FIG. 10 is a schematic diagram of the structure of a device for interference signal detection according to an embodiment of the present application. As shown in FIG. 10, an apparatus for interference signal detection 1000 according to an embodiment of the present application includes at least one processor 1001 and a memory 1002. The apparatus for interference signal detection 1000 also includes a communication component 1003. The processor 1001, the memory 1002 and the communication component 1003 are connected via a bus 1004.

In a specific implementation, the at least one processor 1001 executes computer-executable instructions stored in the memory 1002 such that the at least one processor 1001 performs the method for interference signal detection as performed by the device for interference signal detection 1000 above.

The specific implementation process of the processor 1001 can refer to the above-mentioned method embodiment, and has similar implementation principles and technical effects, which will not be repeated here.

In the above-described embodiment shown in FIG. 10, it should be understood that the processor 1001 may be a Central Processing Unit (CPU), another general purpose processor, a Digital Signal Processor (DSP), an Application Specific Integrated Circuit (ASIC), etc. The general purpose processor may be a microprocessor or the processor may be any conventional processor, etc. The acts in the method disclosed in an embodiment of the present application can be performed directly by the hardware processor or by a combination of hardware and software modules in the processor. The memory 602 may include a high-speed random access memory (RAM), may also include a non-volatile memory (NVM), such as at least one magnetic disk memory, or may also be a USB flash drive, a removable hard disk, a read-only memory, a magnetic disk or an optical disk, etc.

An embodiment of the application also provides a storage medium having computer-executable instructions stored therein, when a processor executes the computer-executable instructions, the processor implements the method for interference signal detection above. The storage medium may be implemented by any type of volatile or nonvolatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory(ROM), magnetic memory, flash memory, magnetic disk or optical disk. The storage medium may be any available medium accessible to a general-purpose or special-purpose computer.

An exemplary storage medium is coupled to a processor to enable the processor to read information from and write information to the storage medium. Of course, the storage medium can also be a component of the processor. The processor and storage medium can be located in an Application Specific Integrated Circuit (ASIC). Of course, the processor and the storage medium can also exist as discrete components in an electronic device or a main control device.

An embodiment of the present application also provides a program product, such as a computer program, which, when executed by the processor, implements the method for interference signal detection covered by the embodiments of the present application.

An embodiment of the present application also provides an integrated circuit, as shown in FIG. 11, the integrated circuit includes a radio frequency module 2011, an analog signal processing module 2012, and a digital signal processing module 2013 sequentially connected.

The radio frequency module 2011 is used for generating a radio frequency transmitting signal and receiving a radio frequency echo signal.

The analog signal processing module 2012 is used for performing down-conversion processing on the radio frequency echo signal to obtain an intermediate frequency signal.

The digital signal processing module 2013 is used for performing analog-to-digital conversion on the intermediate frequency signal to obtain a digital signal; the digital signal processing module is further used for performing interference signal detection based on the method for interference signal detection described in any embodiment of the application.

In an optional embodiment, the above integrated circuit may be a millimeter wave radar chip. The types of digital function modules in the integrated circuit can be determined according to the actual requirements. For example, in the millimeter wave radar chip, the data processing module can be used for operations such as range-dimensional Doppler transform, velocity-dimensional Doppler transform, constant false alarm detection, direction of wave arrival detection, point cloud processing, etc., for obtaining information such as range, angle, velocity, shape, size, surface roughness and dielectric characteristics of the target. Optionally, the integrated circuit may be of an AiP (Antenna-In-Package) chip structure, an AoP (Antenna-On-Package) chip structure, or an AoC (Antenna-On-Chip) chip structure, etc.

In an optional embodiment, when the integrated circuit is of a chip structure, at least two chips may be used to form a cascade structure to form a radar system with a larger antenna aperture and greater processing capability, which will not be repeated here for the sake of simplicity. However, it should be understood that the techniques to be learned by those skilled in the art based on the contents described herein should be included in the scope of what is documented in this application.

The application also provides a radio device, as shown in FIG. 12, which includes: a carrier 4; an integrated circuit 5 described in any embodiment of the present application, which is provided on the carrier 4; an antenna 6, which is provided on the carrier 4, or is integrated with the integrated circuit 5 as an integral device provided on the carrier 4 (that is, at this time, the antenna can be an antenna provided in an AiP, AoP, or AoC structure); wherein, the integrated circuit 5 is connected with the antenna 6 (that is, at this time, the sensor chip or integrated circuit is not integrated with an antenna, such as conventional SoC, etc.), for transmitting the radio frequency transmitting signal and receiving the radio frequency echo signal. Herein, the carrier can be a printed circuit board PCB (such as a development board, a data acquisition board or a main board of a device, etc.), and the first transmission line can be a PCB routing.

The application also provides a terminal device, which includes a device body; and a radio device according to any embodiment of the present application provided on the device body; wherein the radio device is configured to enable target detection and/or communication to provide reference information for operation of the device body.

On the basis of the embodiments described above, in an optional embodiment of the present application, the radio device may be provided outside or inside the device body, while in other optional embodiments of the present application, the radio device can be partially provided inside and partially provided outside the device body. The embodiments of the present disclosure are not limited thereto, it all depends specifically.

In an optional embodiment, the above device body may be components and products applied to fields such as smart cities, smart houses, transportation, smart homes, consumer electronics, security monitoring, industrial automation, in-cabin detection (such as smart cockpits), medical devices and health care. For example, the device body can be smart transportation device (such as automobiles, bicycles, motorcycles, ships, subways, trains, etc.), security device (such as cameras), liquid level/flow rate detection device, smart wearable device (such as bracelets, glasses, etc.), smart home device (such as sweeping robots, door locks, televisions, air conditioners, smart lights, etc.), various communication devices (such as mobile phones, tablet computers, etc.), as well as road gates, smart traffic lights, smart signs, traffic cameras and various industrial mechanical arms (or robots), etc. The device body can be various instruments for detecting vital signs parameters and various devices equipped with the instruments, such as vital signs characteristics detection in automobile cabins, indoor personnel monitoring, intelligent medical devices, consumer electronic devices, etc.

It should be noted that, the radio device may achieve functions such as target detection and/or communication by transmitting and receiving radio signals to provide detection target information and/or communication information to the device body, thereby assisting or even controlling the operation of the device body. For example, when the above-mentioned device body is applied to advanced driving assistance system (ADAS), the radio device (such as millimeter wave radar) as on-board sensor can assist ADAS system to achieve application scenarios such as adaptive cruise, autonomous emergency braking (AEB), blind spot detection (BSD), lane change assist (LCA), rear cross traffic alert (RCTA), parking assistance, rear vehicle warning, collision avoidance (such as door opening warning/collision avoidance, etc.), pedestrian detection, etc.

Those of ordinary skill in the art will appreciate that all or part of the acts to implement various method embodiments described above may be accomplished by hardware associated with program instructions. The aforementioned program can be stored in a computer readable storage medium. The program, when executed, performs the acts including various method embodiments described above; the aforementioned storage media includes various media capable of storing program codes such as ROM, RAM, magnetic disk or optical disk.

In one or more of the above exemplary embodiments, the described functionality may be implemented in hardware, software, firmware or any combination thereof. If implemented in software, the function may be stored on or transmitted via a computer-readable medium as one or more instructions or codes and executed by a hardware-based processing unit. The computer-readable medium may include a computer-readable storage medium corresponding to a tangible medium, such as a data storage medium, or include a communication medium that includes any medium that facilitates the transfer of a computer program from one place to another, for example in accordance with a communication protocol. In this way, the computer-readable medium may generally correspond to a non-transitory tangible computer-readable storage medium or a communication medium such as a signal or carrier wave. The data storage medium may be any available medium accessible by one or more computers or one or more processors to retrieve instructions, codes, and/or data structures for implementing the techniques described herein. The computer program product may include a computer readable medium.

By way of example, but not as limitation, such computer-readable storage media may include RAM, ROM, EEPROM, CD-ROM or other optical disk storage, disk storage or other magnetic storage, flash memory, or any other medium that may be used to store desired program code in the form of instructions or data structures and that may be accessed by a computer. Furthermore, any connection may also be referred to as a computer-readable medium. For example, if instructions are transmitted from a web site, server, or other remote source using coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of the medium. However, it should be understood that computer-readable storage media and data storage media do not contain connections, carriers, signals, or other transient (instantaneous) media, but are intended for non-transient tangible storage media. As used herein, magnetic disks and optical discs include compact discs (CD), laser discs, optical discs, digital versatile discs (DVD), floppy discs or Blu-ray discs, etc., where magnetic discs generally reproduce data magnetically, while optical discs use lasers to reproduce data optically. The above combination thereof should also be included in the scope of computer readable media.

In some aspects, the functionality described herein may be provided within dedicated hardware and/or software modules configured for encoding and decoding or incorporated in a combined codec. Furthermore, the techniques described may be fully implemented in one or more circuits or logic elements.

The technical solutions of embodiments of the present application may be implemented in a wide variety of apparatuses or devices including a wireless handset, an integrated circuit (IC) or a set of ICs (e.g. a chipset). Various components, modules, or units are described in embodiments of the present application to emphasize functional aspects of an apparatus configured to perform the described techniques, but do not necessarily need to be implemented by different hardware units. Rather, as described above, the various units may be combined in a codec hardware unit or provided by a collection of interoperable hardware units (including one or more processors as described above) in combination with suitable software and/or firmware.

Finally, it should be noted that the above embodiments are only used to explain the technical solutions of embodiments of the present application, but not to limit them. Although the embodiments of the present application have been described in detail with reference to the aforementioned embodiments, it should be understood by those of ordinary skill in the art that they can still modify the technical solutions recorded in the aforementioned embodiments, or make equivalent substitutions for some or all of the technical features therein; and these modifications or substitutions do not make the essence of the corresponding technical solutions out of the scope of the technical solutions of embodiments of the present application.

## Claims

1. A method for interference signal detection, comprising:
transmitting a target signal based on a radar;
receiving N frames of echo signals, wherein the N frames of echo signals are signals returned after the target signal is reflected; wherein N is an integer greater than 1;
obtaining N pieces of 2D FFT plane information according to the N frames of echo signals, wherein any piece of 2D FFT plane information comprises power information corresponding to a range and a velocity; and
detecting whether an echo signal is interfered according to a piece of accumulated power information corresponding to a range gate in the piece of 2D FFT plane information, wherein the piece of accumulated power information corresponding to the range gate is a piece of accumulated power information of sampling points of the range gate in the piece of 2D FFT plane information along a dimension of the velocity, and the range gate is a scope of range.

2. The method according to claim 1, wherein detecting whether the echo signal is interfered according to the piece of accumulated power information corresponding to the range gate in the piece of 2D FFT plane information comprises:
for any piece of 2D FFT plane information of the N pieces of 2D FFT plane information, calculating pieces of accumulated power information of the sampling points of M range gates in the any piece of 2D FFT plane information along the dimension of the velocity respectively, wherein the M range gates are continuous; where M is an integer greater than 1;
determining a signal subject to interference among the N frames of echo signals according to the pieces of accumulated power information corresponding to the M range gates.

3. The method according to claim 2, wherein determining the signal subject to interference among the N frames of echo signals according to the pieces of accumulated power information corresponding to the M range gates comprises:
for any first frame of echo signal and second frame of echo signal among the N frames of echo signals, calculating difference values between pieces of accumulated power information corresponding to the first frame of echo signal and the second frame of echo signal in range gates with a same index value respectively and taking absolute values of the difference values to obtain L absolute difference values; wherein L is an integer greater than 1 and less than or equal to M;
when there exists a target absolute difference value greater than a first threshold among the L absolute difference values, determining that an echo signal with a greater piece of accumulated power information in a target range gate among the first frame of echo signal and the second frame of echo signal is the signal subject to interference; wherein the target range gate is a range gate in which a calculated absolute difference value is the target absolute difference value.

4. The method according to claim 3, wherein the first frame of echo signal is a signal received prior to the second frame of echo signal, and the method further comprises:
if it is determined that the first frame of echo signal among the first frame of echo signal and the second frame of echo signal is the signal subject to interference, turning off an anti-interference mechanism;
if it is determined that the second frame of echo signal among the first frame of echo signal and the second frame of echo signal is the signal subject to interference, activating the anti-interference mechanism.

5. The method according to claim 2, wherein determining the signal subject to interference among the N frames of echo signals according to the pieces of accumulated power information corresponding to the M range gates comprises:
for any third frame of echo signal and fourth frame of echo signal among the N frames of echo signals, calculating a difference value between pieces of accumulated power information corresponding to the third frame of echo signal and the fourth frame of echo signal in a first range gate and taking an absolute value of the difference value to obtain a first absolute difference value, wherein the first range gate is any one of the M range gates;
when the first absolute difference value is greater than a first threshold, determining that an echo signal with a greater piece of accumulated power information corresponding to the first range gate among the third frame of echo signal and the fourth frame of echo signal is the signal subject to interference.

6. The method according to claim 2, wherein determining the signal subject to interference among the N frames of echo signals according to the pieces of accumulated power information corresponding to the M range gates comprises:
when there is a piece of accumulated power information greater than a second threshold among the pieces of accumulated power information corresponding to the M range gates of a fifth frame of echo signal among the N frames of echo signals, determining that the fifth frame of echo signal is the signal subject to interference; wherein the fifth frame of echo signal is any one of the N frames of echo signals.

7. The method according to claim 1, wherein detecting whether the echo signal is interfered according to the piece of accumulated power information corresponding to the range gate in the piece of 2D FFT plane information comprises determining whether a current frame of echo signal is interfered by:
based on the piece of 2D FFT plane information of the current frame of echo signal and a reference frame of echo signal among the N frames of echo signals, subtracting, from pieces of accumulated power information corresponding to range gates with L index values in the current frame of echo signal, pieces of accumulated power information corresponding to range gates with the same index values in the reference frame of echo signal, respectively, to obtain L difference values;
when a set condition is met, determining that the current frame of echo signal is interfered; wherein the set condition is: "an absolute value of at least one of the L difference values is greater than a first threshold and is positive" or " absolute values of the L difference values are all greater than the first threshold and are positive";
wherein the reference frame of echo signal is a frame of echo signal adjacent or non-adjacent to the current frame of echo signal; 1 <L<M, M is a total number of range gates in the piece of 2D FFT plane information.

8. The method according to claim 1, wherein detecting whether the echo signal is interfered according to the piece of accumulated power information corresponding to the range gate in the piece of 2D FFT plane information comprises determining whether a current frame of echo signal is interfered by:
based on the piece of 2D FFT plane information of the current frame of echo signal, calculating a piece of accumulated power information corresponding to each of range gates with L index values in the current frame of echo signal, where 1 ≤L≤M, M is a total number of range gates in the piece of 2D FFT plane information;
when a set condition is met, determining that the current frame of echo signal is interfered; wherein the setting condition is that "at least one of the pieces of accumulated power information is greater than a second threshold" or "all of the pieces of accumulated power information is greater than the second threshold".

9. The method according to any one of claims 1-5, wherein obtaining the N pieces of 2D FFT plane information according to the N frames of echo signals comprises:
performing down-conversion processing on the N frames of echo signals respectively to obtain N intermediate frequency signals;
performing sampling and two-dimension fast Fourier transform on the N intermediate frequency signals respectively to obtain the N pieces of 2D FFT plane information; wherein the radar is a millimeter wave radar.

10. An apparatus for interference signal detection, comprising:
a transmitting module, configured to transmit a target signal based on a radar;
a receiving module, configured to receive N frames of echo signals, wherein the N frames of echo signals are signals returned after the target signal is reflected; wherein N is an integer greater than 1;
a first determination module, configured to obtain N pieces of 2D FFT plane information according to the N frames of echo signals, wherein any piece of 2D FFT plane information comprises power information corresponding to a range and a velocity;
a calculation module, configured to calculate, for any piece of 2D FFT plane information of the N pieces of 2D FFT plane information, pieces of accumulated power information of sampling points of M range gates in the any piece of 2D FFT plane information along a dimension of the velocity respectively, wherein a range gate is a scope of range and the M range gates are continuous; where M is an integer greater than 1; and
a second determination module, configured to determine a signal subject to interference among the N frames of echo signals according to the pieces of accumulated power information corresponding to the M range gates.

11. A method for interference signal detection, applied in an FMCW sensor, comprising:
performing 2D-FFT processing on an echo signal to obtain at least two frames of range-velocity data;
for any frame of range-velocity data, selecting at least part of range gates, and performing energy accumulation on the selected range gates respectively along a velocity dimension to obtain an energy accumulation value of each of the selected range gates; and
acquiring a difference value between energy accumulation values of range gates with a same index value of any two frames of range-velocity data to determine whether the echo signal is interfered.

12. The method according to claim 11, wherein acquiring the difference value between the energy accumulation values of the range gates with the same index value of any two frames of range-velocity data to determine whether the echo signal is interfered comprises:
determining an energy accumulation value of a range gate with a preset index value in a first frame of range-velocity data as a first energy accumulation value;
determining an energy accumulation value of a range gate with the preset index value in a second frame of range-velocity data as a second energy accumulation value;
subtracting the second energy accumulation value from the first energy accumulation value to obtain the difference value;
if an absolute value of the difference value is greater than a preset threshold and the difference value is positive, determining that an echo signal corresponding to the first frame of range-velocity data is a signal subject to interference and an echo signal corresponding to the second frame of range-velocity data is a signal not subject to interference;
if the absolute value of the difference value is greater than the preset threshold and the difference value is negative, determining that the echo signal corresponding to the second frame of range-velocity data is a signal subject to interference, and the echo signal corresponding to the first frame of range-velocity data is a signal not subject to interference.

13. The method according to claim 12, wherein,
acquiring the difference value between the energy accumulation values of the range gates with the same index value of any two frames of range-velocity data to determine whether the echo signal is interfered further comprises:
if the absolute value of the difference value is less than or equal to the preset threshold, determining that the echo signal corresponding to the first frame of range-velocity data and the echo signal corresponding to the second frame of range-velocity data are all signals not subject to interference;
wherein the preset threshold is greater than a threshold for performing CFAR processing on the echo signal.

14. The method according to claim 13, wherein when it is determined that the echo signal corresponding to the first frame of range-velocity data and the echo signal corresponding to the second frame of range-velocity data are all signals not subject to interference, if the first energy accumulation value is greater than a preset average threshold, determining that the echo signal corresponding to the first frame of range-velocity data contains target information.

15. The method according to claim 11, wherein,
the obtained any two frames of range-velocity data comprises a current frame of range-velocity data and a reference frame of range-velocity data, wherein the reference frame is adjacent or not adjacent to the current frame;
acquiring the difference value between the energy accumulation values of the range gates with the same index value of any two frames of range-velocity data to determine whether the echo signal is interfered comprises:
determining an energy accumulation value of a range gate with a preset index value in the current frame of range-velocity data as a first energy accumulation value; determining an energy accumulation value of a range gate with the preset index value in the reference frame of range-velocity data as a second energy accumulation value;
subtracting the second energy accumulation value from the first energy accumulation value to obtain the difference value;
if an absolute value of the difference value is greater than a preset threshold and the difference value is positive, determining that an echo signal corresponding to the current frame of range-velocity data is a signal subject to interference, and activating an anti-interference mechanism;
if the absolute value of the difference value is greater than the preset threshold and the difference value is negative, or the absolute value of the difference value is not greater than the threshold, determining that the echo signal corresponding to the current frame of range-velocity data is a signal not subject to interference, and turning off the anti-interference mechanism.

16. A device for interference signal detection, comprising at least one processor and a memory; wherein
the memory stores computer-executable instructions;
the at least one processor executes the computer-executable instructions stored in the memory to enable the at least one processor to perform the method of any one of claims 1-9 or 11-15.

17. A computer-readable storage medium having computer-executable instructions stored therein,
wherein when a processor executes the computer-executable instructions, the processor implements the method of any one of claims 1-9 or 11-15.

18. An integrated circuit, comprising a radio frequency module, an analog signal processing module, and a digital signal processing module sequentially connected; wherein
the radio frequency module is configured to generate a radio frequency transmitting signal and receive a radio frequency echo signal;
the analog signal processing module is configured to perform down-conversion processing on the radio frequency echo signal to obtain an intermediate frequency signal; and
the digital signal processing module is configured to perform analog-to-digital conversion on the intermediate frequency signal to obtain a digital signal;
wherein the digital signal processing module is further configured to perform interference signal detection estimation based on the method of any of claims 1-14.

19. A radio device, comprising:
a carrier;
the integrated circuit according to claim 18, which is provided on the carrier;
an antenna, which is provided on the carrier, or is integrated with the integrated circuit as an integral device provided on the carrier;
wherein the integrated circuit is connected to the antenna and configured to transmit the radio frequency transmitting signal and/or receive the radio frequency echo signal.

20. A terminal device, comprising:
a device body; and
the radio device according to claim 19 provided on the device body;
wherein the radio device is configured to enable target detection and/or communication to provide reference information for operation of the device body.
